# EUROPEAN PATENT SPECIFICATION

(11) **EP 1 443 669 B1**
(45) Date of publication and mention of the grant of the patent: **03.05.2017**
(21) Application number: 03425058.9
(22) Date of filing: 31.01.2003
(51) Int. Cl.: H04B 1/707, H04B 7/26

(54) **Device for synchronization and codegroup identification**
Vorrichtung zur Synchronisierung und Kodegruppenerkennung
Dispositif pour synchronisation et identification de code

(43) Date of publication of application: 04.08.2004
(73) Proprietor: France Brevets, 75009 Paris (FR)
(72) Inventor: Rimi, Francesco, 91011 Alcamo (Trapani) (IT); Avellone, Giuseppe, 90100 Palermo (IT); Pappalardo, Francesco, 95047 Paternò (Catania) (IT); Speziali, Filippo, 89040 S. Ilario Jonico (Reggio Calabria) (IT); Galluzzo, Agostino, 92020 Palma di Montechiaro (Agrigento) (IT)
(74) Representative: Nguyen Van Yen, Christian

(56) References cited:
- WO-A-00/54424
- WO-A-00/67404
- US-B1- 6 363 060
- LEE G ET AL: "A SEARCHER DESIGN FOR THE SYNCHRONIZATION CHANNEL OF WCDMA" VTC 2000-FALL. IEEE VTS 52ND. VEHICULAR TECHNOLOGY CONFERENCE. BOSTON, MA, SEPT. 24 - 28, 2000, IEEE VEHICULAR TECHNOLGY CONFERENCE, NEW YORK, NY: IEEE, US, vol. 3 OF 6. CONF. 52, 24 September 2000 (2000-09-24), pages 1364-1370, XP000988594 ISBN: 0-7803-6508-9
- CHI-KUANG CHEN ET AL: "A Digital Signal Processor With Programmable Correlator Array Architecture for Third Generation Wireless Communication System", IEEE TRANSACTIONS ON CIRCUITS AND SYSTEMS II: ANALOG AND DIGITALSIGNAL PROCESSING, INSTITUTE OF ELECTRICAL AND ELECTRONICS ENGINEERS INC, 345 EAST 47 STREET, NEW YORK, N.Y. 10017, USA, vol. 48, no. 12, 1 December 2001 (2001-12-01), XP011013517, ISSN: 1057-7130

## Description

### Field of the invention

The present invention relates to telecommunication techniques and has been developed with particular attention paid to its possible application to telecommunication systems based upon the CDMA/3GPP FDD and CDMA/3GPP TDD standards (where said acronyms stand for Code-Division Multiple Access/Third-Generation Partnership Project Frequency Division Duplex, and Code-Division Multiple Access/Third-Generation Partnership Project Time Division Duplex, respectively).

Even though in what follows, for reasons of clarity and simplicity of exposition, practically exclusive reference will be made to the aforesaid applications, it should, however, be borne in mind that the scope of the invention is more general. The invention is, in fact, applicable to all the telecommunication systems in which operating conditions of the type described in what follows occur: by way of non-exhaustive example, the satellite-telecommunication systems and the mobile cellular systems corresponding to the UMTS, CDMA2000, IS95 or WBCDMA standards may be cited.

### Description of the related art

To enable acquisition of a base station by a mobile terminal included in a telecommunication system based upon the standard 3GPP FDD mode, TDD mode or the like, the corresponding receiver requires means capable of carrying out the function of frame synchronization and identification of the so-called codegroup. The possibility of executing the said functions is essential for the execution of the subsequent steps in the context of the cell-search system.

In particular, when a mobile terminal is turned on, it does not have any knowledge of the timing of the transmitting cell to which it is to be assigned. The 3GPP standard, therefore, proposes an initial cell-search procedure for acquiring the cell signal and synchronizing therewith.

Said procedure basically comprises three steps:
- slot synchronization (first step);
- frame synchronization and identification of the codegroup, i.e., the group of cell codes (second step); and
- identification of the scrambling code (third step).

In the implementation of the second step described above it is assumed that the slot synchronization has previously been obtained during the first step.

To obtain at this point the frame synchronization and identify the codegroup, to which the offset of the cell is associated, in the second step the Secondary Synchronization CHannel (SSCH) is used, on which are transmitted, at the beginning of each slot, codes or words of 256 chips (i.e., letters).

The sixteen 256-chip complex codes used by the standard are generated on the basis of the following rules:
- a first sequence at chip rate b having a repetition period of 16 (i.e., repeating every 16 elements) is multiplied by a sequence 16 times slower according to the two formulas appearing below so as to obtain the base sequence z:
   z = <b, b, b, -b, b, b, -b, -b, b, -b, b, -b, -b,-b, -b, -b>
   b = <1, 1, 1, 1, 1, 1, -1, -1, -1, 1, -1, 1, - 1, 1, 1, -1>

The base sequence z is then multiplied element by element by a Hadamard code of length 256 chosen according to the following rule: if m is the number identifying the Secondary Synchronization Code (SSC) to be generated, the number of the Hadamard code to be multiplied by the sequence z is equal to 16 x (m-1), with m ranging from 1 to 16.

Generation of the synchronization codes SSC for the TDD mode is similar to the one used for the FDD mode, with the difference that, in the former case, just twelve of the sixteen codes SSC are used.

Moreover, the FDD mode and TDD mode differ from one another as regards the way in which the codegroups are associated to the contents of the secondary synchronization channel SSCH.

In the FDD mode, on the secondary synchronization channel SSCH a code SSC is sent for each slot, in 15 consecutive slots. There are 64 possible sequences indicated by the standard, which belong to a Reed-Solomon code defined therein, and each sequence identifies a group of eight primary scrambling codes, among which the aforementioned third step of the cell-search procedure will identify the code of the cell onto which the first two steps of the procedure have locked.

In the TDD mode, each slot containing the channel SCCH contains three codes SSC. According to the standard, four possible sets of three codes are defined, the combination and the relative phases of which define the codegroups. Each codegroup identifies one slot offset between the start of the slot and the start of the code on the channel SSCH, and four possible basic midambles to each of which is associated a scrambling code. The third step of the cell-search procedure defines which midamble is used in the Primary Common-Control Physical CHannel (P-CCPCH).

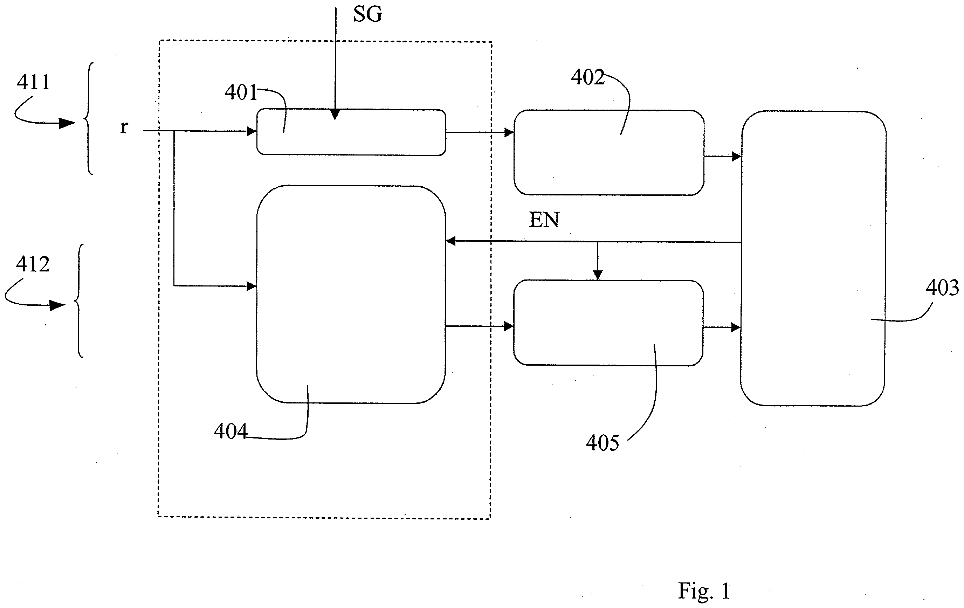

Figure 1 is a schematic representation of the architecture of a known circuit which implements the first step and second step of the cell-search procedure.

The received signal r is sent in parallel to a first branch 411, which implements the first step of the cell-search procedure, and to a second branch 412, which implements the second step of the cell-search procedure. Both the circuits of the first branch 411 and the circuits of the second branch 412 operate under the control of a controller, designated by 403, which receives the results of their processing operations.

The first branch 411 comprises a matched filter 401 for carrying out the correlation on the Primary Synchronization Channel (PSC), setting said channel in correlation with a sequence SG structured as first hierarchical Golay sequence, and then a subsequent block designated by 402, which implements the algorithm of the first step of the cell-search procedure.

The use of Golay sequences to carry out synchronization functions in systems of a spread-spectrum and CDMA type is known to the art, as emerges, for instance, from WO-A-0051392, WO-A-0054424, WO-A-0067404 and WO-A-0067405.

The second branch 412 comprises, instead, a correlation section 404, which operates on the secondary codes SSC and is then followed by a block designated by 405, which implements the algorithm of the second step of the cell-search procedure. Operation of said correlation section 404 is enabled by means of an appropriate enabling signal EN issued by the controller 403.

Since the circuits that implement the second step of the cell-search procedure for the FDD mode identify the individual chip, they are of the type illustrated schematically in Figure 2, known from the European patent application EP02425619.0 in the name of the present applicant.

Said circuits comprise, therefore, at input, as correlation section, a bank of correlators 10, the outputs of which supply the energies corresponding to the individual chips. After a possible masking with appropriate weights, represented by a block 12, the energies are added in a node 14 and are then stored in a bank of registers 16, where each row represents one of the words of the code that is to be recognized, whilst the columns represent the possible frame starting points in terms of slots, i.e., 15 possible starting points. The reference number 18 designates a block basically consisting of a comparator which enables the search for the maximum value to be carried out on the memory bank 16. The purpose of the above is to define both the codegroup CD used by the cell being currently evaluated and the start of the frame basically expressed as frame offset OF transmitted by the cell itself. In other words, the frame offset OF is a quantity identifying the frame synchronization with reference to the slot timing obtained in the first step - not illustrated specifically in the drawings.

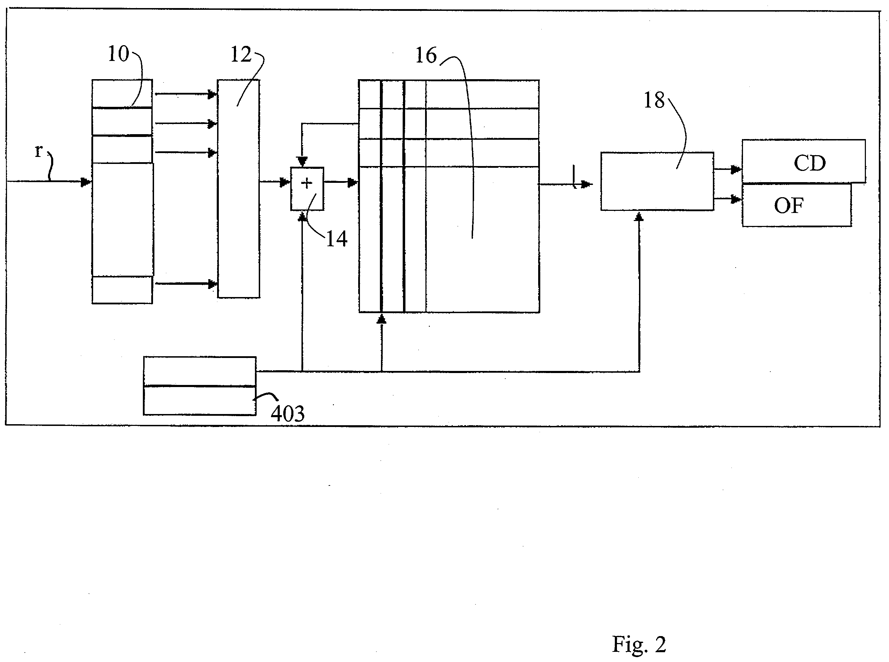

Therefore, the circuit of Figure 2 basically uses for carrying out correlation a bank of correlators in parallel or, alternatively, a bank which performs the Fast Hadamard Transform.

In the TDD mode, as has been said, the second step of the cell-search procedure is, instead, carried out assuming that the position of the synchronization burst, as well as a first slot synchronization, have been acquired and defined in the first step of the cell-search procedure so as to obtain:
- slot synchronization, by defining the offset between the start of the slot and the position of the synchronization burst therein;
- codegroup identification; and
- further information, such as the cell parameter.

To obtain the above, the secondary synchronization channel SSCH is used, on which there are transmitted, in the synchronization slot and simultaneously to the channel PSC, three 256-chip codes coming from of a set of twelve complex codes, which is a subset of the secondary synchronization codes SSC used in the FDD mode.

To extract all the necessary information from the channel SSCH, it is necessary to correlate the received signal with the possible codes transmitted on the channel SSCH. Of these codes, it is necessary to identify the set of three codes with the highest correlation energy and to use their phases to define, in accordance with the standard, the corresponding parameters of slot offset (i.e., the distance in time between the start of the slot and the start of the synchronization code), codegroup, and frame number (even or odd frame).

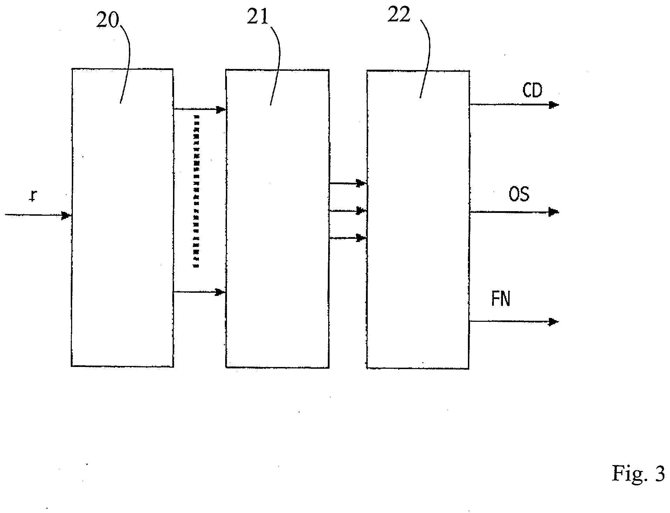

The above operation is carried out by means of a circuit that envisages as correlation section twelve matched filters set in parallel. Said solution is schematically illustrated in the diagram of Figure 3, where the reference number 20 designates a bank of twelve complex finite-impulse-response (FIR) filters, which are coupled to the twelve possible secondary synchronization codes SSC. The samples of the received signal r are sent at input to the bank 20 of FIR filters, and on the twelve outputs of the bank 20 signals indicating the correlation energies corresponding to said codes SSC are generated. These signals are sent to a system, designated by 21, for detecting the maximum value.

The system 21 for detecting the maximum value identifies a given number (equal to three) of codes SSC having the highest correlation energy, and these codes are sent to a comparison block designated by 22. The block 22 carries out an operation of comparison with a table, which stores - according to the possible combinations of the phase differences of the set of three codes SSC identified - corresponding codegroups CD, slot offsets OS, and frame numbers FN, which are then supplied at output by said comparison block 22.

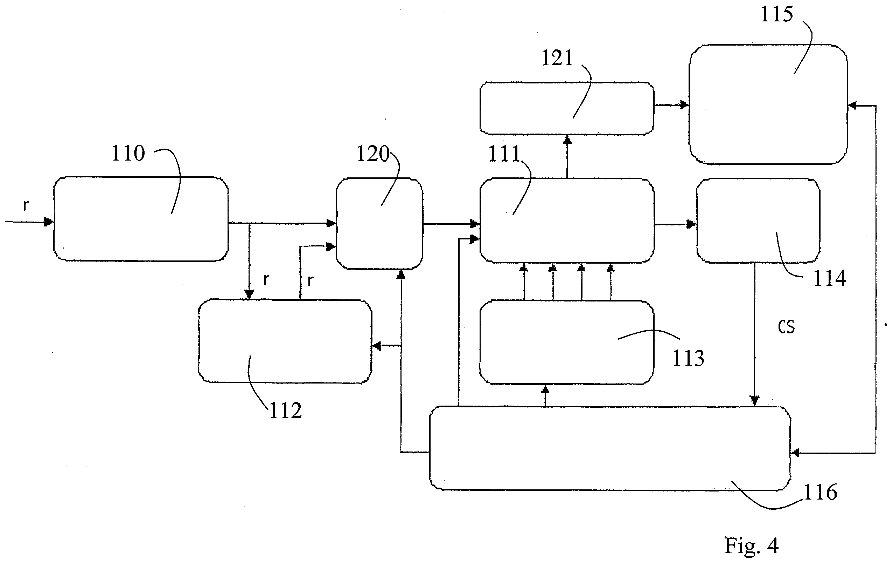

Figure 4 shows an alternative architecture for implementing the second step of the cell-search procedure in the TDD mode, known from the Italian patent application TO2002A001082 in the name of the present applicant.

The received signal r is sent at input to a block designated by 110, which carries out a first correlation operation on a first sequence 16 chips long.

The received signal r at output from block 110 is sent to a bank of correlators 111, which constitutes the correlation section. The samples of the received signal r are moreover stored in a storage unit 112.

The correlator bank 111 comprises only four correlator circuits, one for each code set. The bank 111 receives, in fact, from a system for generating codes designated by 113 four "first" codes SSC, each one of which belongs to and identifies one of the four possible code sets within the set of codes SSC.

There are twelve codes SSC in all, and each code set comprises a "first" code identifying the set, and a subset of remaining codes comprising the other two codes of the set.

The correlation operation performed in block 111 is hence able to supply at output an estimate of the code set received.

In this connection, a unit designated by 114, which carries out search for the maximum value receives from the correlator bank 111 the energies corresponding to the first four codes SSC supplied by the system and supplies at output a first code SSC having the best correlation energy, with the corresponding phase offset. In this way, a code set CS to which said first code SSC belongs is identified.

The first code SSC and its phase offset are to be sent on to a comparison block 115, whilst the information on the code set is sent to a controller designated by 116.

The controller 116 presides over operation of the circuit and, in particular, is designed to supply the code-generation system 113 with the information on the "first" four codes SSC to be generated for identifying the four code sets.

On the basis of the first code and the corresponding code set CS identified by means of the search for the maximum carried out in unit 114, the controller 116 sends to the code-generation system 113 the information regarding which other codes SSC are to be generated for the operation of correlation with the received signal r stored in the storage unit 112.

The above other codes are simply the remaining two codes SSC comprised in the subset that completes the code set corresponding to the first code selected by means of the search carried out in unit 114.

Upstream of the bank 111 a multiplexer 120 is provided, which, driven by the controller 116, selects the output of the block 110 or else the output of the storage unit 112 for sending it to the bank 111.

In this way, initially, the received signal r, in addition to being stored in the unit 112, is sent directly to the block 111, where it is correlated with the "first" four codes that identify the four code sets coming from block 113.

Subsequently, once the reference code set has been identified - as a result of the search carried out in the unit 114 -, the samples of the received signal r stored in the unit 112 can be sent to the block 111 to be correlated with the two remaining codes of the aforesaid code set.

The correlator bank 111 is equipped with a correlator memory 121, in which the first code SSC of the detected code set is stored.

On the basis of the information regarding the selected code set CS, the controller 116 issues a command to the code-generation system 113 so that the latter will generate the two codes corresponding to the two codes that are missing for composing the set of three codes of the code set CS in order to make a correlation with the samples of the received signal r stored in the storage unit 112.

The result of this correlation operation (which is carried out, so to speak, by "recycling" two of the correlators contained in the bank 111) is also supplied to the block 115, where the set of three codes of the code set CS is recomposed; said set of three can be used - together with the corresponding phases - for the comparison with the standard tables in order to extract the corresponding parameters from the table contained in the comparison block 115.

The solutions according to the known art illustrated in Figures 1, 2, 3 and 4 require, therefore, allocation of a certain amount of memory and, consequently, of area on the chip, with a consequent power consumption for implementing the correlation section for the second step of the cell-search procedure. More specifically, the present invention relates to device for obtaining frame synchronisation and for identifying the cell codegroup in a cellular communication system according to the preamble of Claim 1, which is known, e.g. from CHI-KUANG CHEN ET AL, "A Digital Signal Processor With Programmable Correlator Array Architecture for Third Generation Wireless Communication System", IEEE TRANSACTIONS ON CIRCUITS AND SYSTEMS II: ANALOG AND DIGITALSIGNAL PROCESSING, INSTITUTE OF ELECTRICAL AND ELECTRONICS ENGINEERS INC, 345 EAST 47 STREET, NEW YORK, N.Y. 10017, USA, vol. 48, no. 12, 1 December 2001 (2001-12-01), XP011013517, ISSN: 1057-7130.

### Object and summary of the invention

The object of the present invention is to provide a solution which will be able to carry out the functions described in the foregoing in a simplified way so as to perform, for example, the second step of the cell-search procedure as well as a search for the codegroup and offset by means of a simplified hardware, reducing the computational complexity and obtaining a corresponding reduction of the required memory and of power consumption.

According to the present invention, such an object is achieved by means of a process having the characteristics referred to specifically in the claims that follow. The invention also relates to the corresponding device, as well as to the corresponding computer program product, directly loadable into the memory of a digital computer and comprises software code portions for performing the process according to the invention when the product is run on a computer.

Basically, the solution according to the present invention envisages simplifying the processing circuits and the size of the corresponding memory, moreover reducing the computational complexity.

At the same time, the solution according to the invention enables a circuit to be obtained, which allows sharing of parts between the FDD and TDD systems (3.84-Mcps version) in the perspective of obtaining compact dual-mode FDD/TDD systems.

As compared to known solutions, the solution proposed herein, which is based upon a technique of recycling of the acquired data, is simpler, occupies less space and consumes less power.

### Brief description of the annexed drawings

The invention will now be described, purely by way of non-limiting example, with reference to the annexed drawings, in which:
- Figures 1, 2, 3 and 4, which regard the prior art, have already been described in the foregoing;
- Figure 5 illustrates, in the form of a block diagram, a first embodiment of an architecture operating according to the invention;
- Figure 6 illustrates a second embodiment of an architecture operating according to the invention;
- Figure 7 illustrates a third embodiment of an architecture operating according to the invention; and

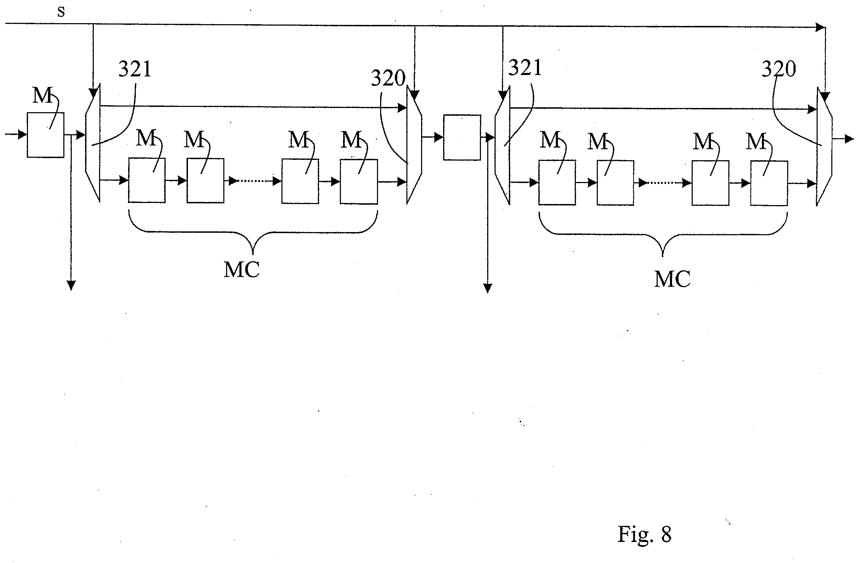

- Figure 8 illustrates the detail of a memory circuit used in the architecture operating according to the invention.

### Detailed description of an exemplary embodiment of the invention

The solution in question is based upon the re-use, in circuits that implement the second step of the cell-search procedure, of circuits provided for implementing the first step of the cell-search procedure, in particular, upon the re-use of the matched FIR filter for the primary channel PSC.

Since the second step of the cell-search procedure is activated after the acquisition of a minimum of slot synchronization in the first step - this synchronization being exact for the TDD mode and with tolerance for the FDD mode - the circumstance enables the samples of the received signal to be sent to the memory registers which make up the FIR filter used in the second step, starting from the estimated starting instant of the secondary synchronization code SSC.

It is therefore possible to use as matched FIR filter the same filter as the one used for the primary channel PSC and, after all the samples corresponding to a generic synchronization code SSC have been stored, it is possible to update the weights of the FIR filter so as to carry out the correlation between the samples received and the desired generic code SSC.

Since, both for the FDD mode and for the TDD mode, it is necessary to carry out more than one correlation, it is possible to use parallel techniques (as many weight masks as the number of secondary codes SSC with which the received samples are to be correlated) or serial techniques (just one mask, the weights of which are updated sequentially).

Moreover, the solution described herein also envisages splitting the FIR filter into two filters so that, in order to pass from one secondary code SSC to the other, it is just necessary to change the sixteen weights of the second filter, which correspond to the multiplication, element by element, of a Hadamard code of length sixteen with an appropriate Golay sequence as described in the standard.

With the filter split into a first filter and a second filter, for the weights of the first filter, it is sufficient to perform a change of sign on eight of said weights in order to pass from the first Golay sequence for the channel PSC to the first Golay sequence for the code SSC, as can be verified easily from the standard.

In addition, the weights of the second filter can be generated in parallel by means of an appropriate code generator.

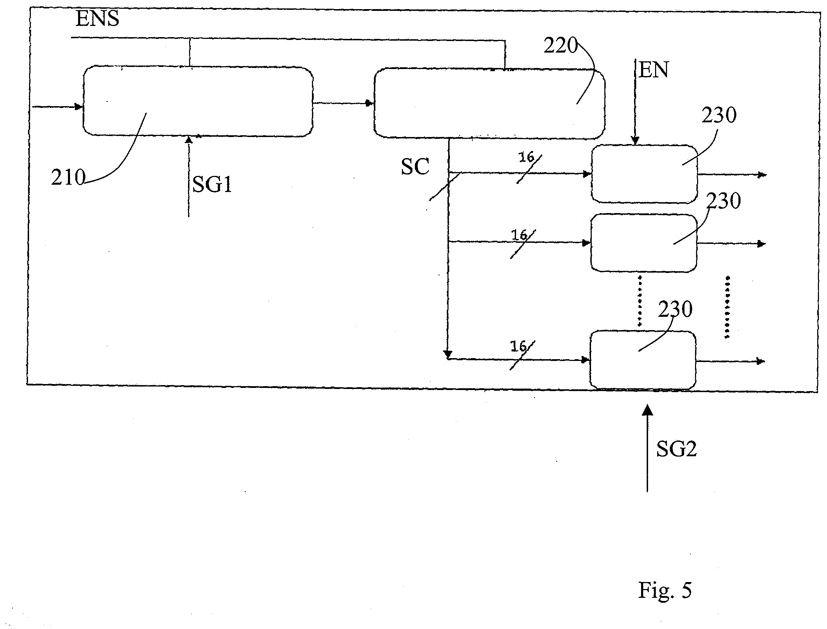

Figure 5 presents a first embodiment of a parallel architecture for implementing the correlation section in FDD mode.

The received signal r is sent at input to a first matched FIR filter 210, which comprises sixteen registers and a corresponding number of output taps. Said first filter 210 receives at input also a first Golay sequence SG1 for the secondary code SSC so as to carry out the filtering as described above.

The signal thus filtered by means of the first filter 210 is sent to a second filter 220, which is also a FIR filter with two hundred and forty registers and sixteen outputs. Operation of said second filter 220 is driven by an enable and stop signal ENS, which likewise operates on the first filter 210, for enabling storage in the filters of the received signal r for the subsequent operation of correlation with the secondary codes SSC.

The first filter 210 and the second filter 220 together make up a matched filter, corresponding to the filter 401 of the primary channel PSC of Figure 1, which is re-used for obtaining also the correlation section of the second step of the cell-search procedure, at the instant in time at which it receives the Golay sequence SG1 for the secondary codes SSC and the enable and stop signal ENS.

The second filter 220 then supplies at output a 16-bit correlation signal SC to each of sixteen masks of weights belonging to a block of masks 230, which basically corresponds to the block 22 of Figure 1. The weights for said masks 230 are made up of a second Golay sequence for the synchronization codes SSC.

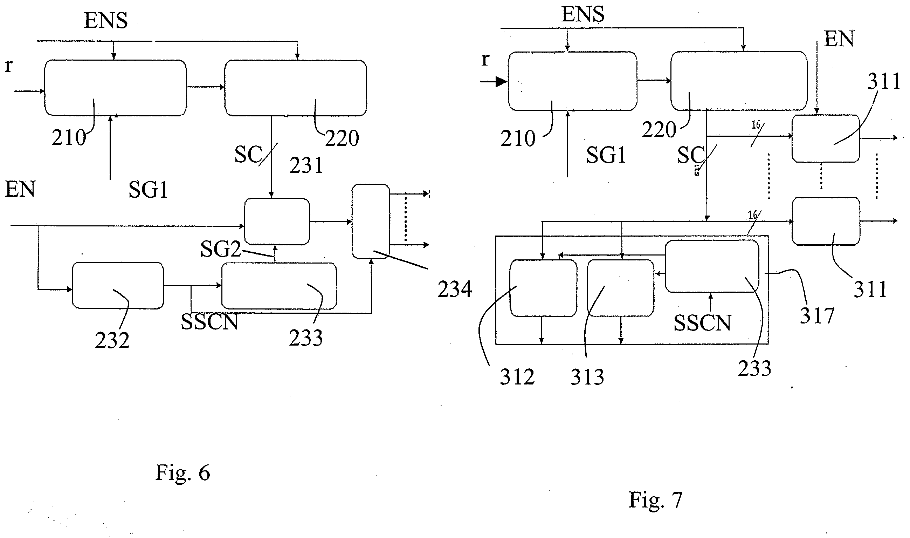

Figure 6 presents a second embodiment of a serial architecture for implementing the correlation section in FDD mode.

The received signal r is sent at input to the first matched FIR filter 210, which receives at input also the first Golay sequence SG1 for the code SSC. The first filter 210 is followed by the second filter 220, both of said filters being driven by the enable and stop signal ENS.

The second filter 220 then supplies at output the 16-bit correlation signal SC to a mask 231, which is designed for applying the weights corresponding to each secondary code SSC. Said mask 231 receives, in fact, the secondary code SSC to which the weight from an appropriate code generator 233 is to be applied, said code generator supplying the second 16-chip sequences for the secondary codes SSC and being driven in turn by a 16-value counter 232, which supplies the generator with the number SSCN of the secondary codes SSC to be correlated.

Both the counter 232 and the code generator 233 are moreover driven by an enabling signal EN.

Downstream of the mask 231 there is provided a demultiplexer circuit 234, which is driven by the secondary-code number SSCN and supplies at output the sixteen correlations to the circuits that complete the second step of the cell search.

Circuits similar to the ones used for the correlation circuit in serial and parallel FDD mode, as shown in Figures 4 and 5, can be used for the correlation section in the TDD mode, substantially replacing the block 20 of Figure 2.

Figure 7 illustrates instead a correlation section designed for being associated to the circuit of Figure 4, i.e., a circuit for the TDD mode that avails itself of the particular division of the codegroups into code sets.

The received signal r is sent at input to the first matched FIR filter 210, which receives at input also the first Golay sequence SG1 for the secondary code SSC. The first filter 210 is followed by the second filter 220, both of said filters being driven by the enable and stop signal ENS.

The second filter 220 then supplies at output the 16-bit correlation signal SC to a block 311, which comprises four masks, each of which corresponds to one of the four code sets envisaged by the standard for the TDD mode.

The 16-bit output of the second filter is moreover supplied to a block 317, which is designed to detect the two secondary codes SSC belonging to the code set identified as described with reference to Figure 3. Said block 317 comprises therefore a mask 312 for the second secondary code SSC belonging to the code set and a mask 313 for the third secondary code SSC which makes up the identified code set, as well as the code generator 233 for driving said masks 312 and 313.

Operation the block 317 is enabled, as has already been mentioned, after identification of the code set in order to define the phases of the two remaining codes SSC of the code set.

It will be noted that, in the embodiments of Figures 5, 6 and 7, the second filter 220 may be activated just in part, should the output of the first filter 210 be sampled every sixteen chips from start of execution of the second step of the cell-search procedure. In this case, in fact, only sixteen memory elements would be necessary, which could be obtained from the original structure of said second filter 220 according to the reduced diagram illustrated in Figure 7.

In said diagram it will be noted that the memory is structured as a series of elements comprising a memory element M set in series to a demultiplexer 321, which is provided with two outputs, one of which is directly connected to the first input of a multiplexer 320 and the other is connected to said multiplexer 320 by means of a cascade MC of memory elements M, fifteen in number. The output of the memory element M upstream of each demultiplexer 321 constitutes the output tap.

The multiplexer 321 and the demultiplexer 320 are controlled by a select signal S, which allows or does not allow the received signal r to pass through the cascades MC of memory elements, using them for filtering the signal r. If the select signal S is, for example, logic zero, the complete filtering structure for the first step of the cell-search procedure is obtained, whereas, if the select signal S is logic one, it will be possible to bypass the cascades MC of memory elements M and obtain a reduced structure, which is more suitable for execution of the second step of the cell-search procedure.

The solution thus far described enables considerable advantages to be achieved as compared with the known solutions.

The circuit generated is, in fact, considerably smaller than known architectures.

In particular, advantageously, a reduction in terms of hardware and area occupied on the chip is achieved. Provided in what follows is an example of the advantages in terms of memory required as compared to the known architectures illustrated in Figures 2, 3 and 4.

For the above architectures, in fact, in the case of the FDD mode, seventeen correlators and one FIR filter matched to the PSC sequence are required, whilst, in the case of the TDD mode, at best, two correlators and one FIR filter matched to the PSC sequence are required.

The proposed solution entails, instead, just one FIR filter, which, during execution of the second step of the cell-search procedure, changes its weights so as to be able to carry out all the correlations with all the possible secondary codes SSC, keeping in memory the acquired data or else sending the outputs of its intermediate taps to an appropriate set of masks.

A further advantage lies in the fact that the taps of the FIR filter for executing the necessary correlations can be obtained in a fast way by means of the use of a parallel generator of OVSF/Walsh-Hadamard codes of the type described, for example, in US-2002-0080856 or in the Italian patent application TO2002A000836.

The amount of memory required by the proposed solution remains practically unchanged. In the serial case, the use of the parallel code generator rules out the need for recourse to a look-up table or adoption of the small memory associated to the prior serial generator. The saving in terms of memory as compared to the look-up table is 256 bits for the FDD mode and 192 bits for the TDD mode, whereas the saving in terms of memory as compared to the prior serial generators is 32 bits.

Advantageously, the solution proposed further enables a considerable reduction in power consumption.

Finally, advantageously, the memory bank 112 of Figure 3 can also be derived from the memory allocated for the second FIR filter, as illustrated in Figure 7.

Of course, without prejudice to the principle of the invention, the details of implementation and the embodiments may be amply varied with respect to what is described and illustrated herein, without thereby departing from the scope of the present invention, as defined by the claims that follow.

## Claims

1. A device for obtaining, as a function of a received signal (r), frame synchronization and for identifying the codegroup in a cellular communication system which uses a plurality of secondary synchronization codes, wherein said received signal (r) is in compliance with the 3GPP standard in FDD or TDD mode, and wherein said device comprises:
a) a first branch (411) for obtaining in a first time interval slot synchronization on a Primary Synchronization Channel, PSC, said first branch (411) comprising at least one primary correlator (401, 210, 220), which receives said received signal (r) and a primary synchronization sequence (SG), and a subsequent block (402) implementing a slot synchronization algorithm;
b) a second branch (412) for obtaining in a second time interval frame synchronization on a Secondary Synchronization Channel, said second branch (412) comprising:
- at least one secondary correlator (404; 210, 220) for correlating in said second time interval said received signal (r) with said secondary synchronization codes for obtaining corresponding energy values,
- a unit for determining energy values (16; 21; 114) designed for searching, amongst said energy values, at least one maximum value and identifying, on the basis of said at least one maximum value, a given number of said secondary synchronization codes; and
- a processing module (18; 22; 115) for obtaining said frame synchronization And for identifying said codegroup on the basis of said given number of said secondary synchronization codes,
c) a control module (403) configured to control the operation of said first (411) and said second (412) branch and which receives the results of the respective processing operations, wherein said at least one primary correlator (401) and said at least one secondary correlator (210, 220) are at least in part constituted by a single correlator and wherein said control module (403) is configured for sending enabling signals (EN, ENS) for controlling by switching said at least one primary correlator (210, 220) in order to operate selectively on one between said primary synchronization sequence (SG) and said secondary synchronization sequences,
**characterized in that** said device comprises, as said correlator, a first matched filter (210) followed in series by a second matched filter (220), wherein said first matched filter comprises sixteen registers and a corresponding number of output taps, wherein said second matched filter (220) comprises two hundred and forty registers second matched and sixteen filter (220) outputs, wherein said is configured to be activated just in part, and wherein the output of said first matched filter (210) is sampled every sixteen chips from start of execution of the frame synchronization procedure, and wherein said device is configured to:
- organizing said synchronization sequences in a first part of secondary sequence (SG1) and in a second part of secondary sequence (SG2);
- sending to said first matched filter (210) and to said second matched filter (220) said first part (SG1) and said second part (SG2),
- performing a change of sign on eight of the weights of the first matched filter in order to pass from a first sequence for the primary synchronization channel to said first sequence for the secondary synchronization codes, and
- passing from one secondary synchronization code to the other by changing the sixteen weights of the second matched filter (220)

2. The device according to Claim 1, **characterized in that** set downstream of said correlator (210, 220) is a set of masking circuits (230; 231; 311, 312, 313).

3. The device according to Claim 2, **characterized in that** the set of masking circuits comprises a plurality of masks set in parallel, one for each output of the second filter (220).

4. The device according to any one of Claims 2 to 3, **characterized in that** the set of masking circuits comprises a mask (231) which receives the outputs of the second filter and **in that** said mask (231) is suitable for changing the values of its own weights under the control of a code generator (233)

5. The device according to any one of Claims 2 to 4, **characterized in that** the set of masking circuits comprises a first set of masks (311) corresponding to a respective code set, and said set of masking circuits further comprises a block (317; 312; 313) for obtaining the words corresponding to the remaining synchronization codes belonging to the subset identified by the processing module (114).

## Patentansprüche

1. Vorrichtung zum Erlangen von Rahmensynchronisation als Funktion eines empfangenen Signals (r) und zum Identifizieren der Codegruppe in einem zellularen Kommunikationssystem, das eine Vielzahl von sekundären Synchronisationscodes verwendet, worin das empfangene Signal (r) den 3GPP-Standard im FDD- oder TDD-Modus erfüllt und worin die Vorrichtung umfasst:
a) einen ersten Zweig (411) zum Erlangen von Schlitzsynchronisation auf einem primären Synchronisationskanal, PSC, in einem ersten Zeitintervall, wobei der erste Zweig (411) mindestens einen primären Korrelator (401; 210, 220), der das empfangene Signal (r) und eine primäre Synchronisationsfolge (SG) empfängt, und einen anschließenden Block (402), der einen Schlitzsynchronisationsalgorithmus implementiert, umfasst;
b) einen zweiten Zweig (412) zum Erlangen von Rahmensynchronisation auf einem sekundären Synchronisationskanal in einem zweiten Zeitintervall, wobei der zweite Zweig (412) umfasst:
- mindestens einen sekundären Korrelator (404; 210, 220) zum Korrelieren des empfangenen Signals (r) in dem zweiten Zeitintervall mit den sekundären Synchronisationscodes zum Erlangen entsprechender Energiewerte;
- eine Einheit zum Bestimmen von Energiewerten (16; 21; 114), die dafür ausgelegt ist, unter den Energiewerten mindestens einen Höchstwert zu suchen und auf der Grundlage des mindestens einen Höchstwerts eine gegebene Anzahl der sekundären Synchronisationscodes zu identifizieren; und
- ein Verarbeitungsmodul (18; 22; 115) zum Erlangen der Schlitzsynchronisation und zum Identifizieren der Codegruppe auf der Grundlage der gegebenen Anzahl der sekundären Synchronisationscodes,
c) ein Steuerungsmodul (403), das dafür konfiguriert ist, die Arbeitsweise des ersten (411) und des zweiten Zweigs (412) zu steuern, und das die Ergebnisse der jeweiligen Verarbeitungsarbeitsschritte empfängt, worin der mindestens eine primäre Korrelator (401) und der mindestens eine sekundäre Korrelator (210, 220) zumindest teilweise durch einen einzigen Korrelator gebildet werden und worin das Steuerungsmodul (403) dafür konfiguriert ist, Aktivierungssignale (EN, ENS) zum Steuern durch Umschalten des mindestens einen primären Korrelators (210, 220) zu senden, um selektiv auf einer aus der primären Synchronisationsfolge (SG) und den sekundären Synchronisationsfolgen zu arbeiten,
**dadurch gekennzeichnet, dass** die Vorrichtung als den Korrelator ein erstes Korrelationsfilter (210), dem in Reihe ein zweites Korrelationsfilter (220) folgt, umfasst, worin das erste Korrelationsfilter sechzehn Register und eine entsprechende Anzahl von Ausgabeanzapfungen umfasst, worin das zweite Korrelationsfilter (220) zweihundertvierzig Register und sechzehn Ausgaben umfasst, worin das zweite Korrelationsfilter (220) dafür konfiguriert ist, nur zum Teil aktiviert zu werden, und worin die Ausgabe des ersten Korrelationsfilters (210) alle sechzehn Chips ab Beginn der Ausführung der Rahmensynchronisationsprozedur abgetastet wird, und worin die Vorrichtung konfiguriert ist zum:
- Organisieren der Synchronisationsfolgen in einem ersten Teil von Sekundärfolge (SG1) und in einem zweiten Teil von Sekundärfolge (SG2);
- Senden des ersten Teils (SG1) und des zweiten Teils (SG2) an das erste Korrelationsfilter (210) und an das zweite Korrelationsfilter (220);
- Durchführen eines Vorzeichenwechsels an acht der Wichtungsfaktoren des ersten Korrelationsfilters, um von einer ersten Folge für den primären Synchronisationskanal zu der ersten Folge für die sekundären Synchronisationscodes überzugehen; und
- Übergehen von einem sekundären Synchronisationscode zum anderen durch Wechseln der sechzehn Wichtungsfaktoren des zweiten Korrelationsfilters (220).

2. Vorrichtung nach Anspruch 1, **dadurch gekennzeichnet, dass** dem Korrelator (210, 220) eine Menge von Maskierungsschaltungen (230; 231; 311, 312, 313) nachgeschaltet ist.

3. Vorrichtung nach Anspruch 2, **dadurch gekennzeichnet, dass** die Menge von Maskierungsschaltungen eine Vielzahl von parallel geschalteten Masken umfasst, eine für jede Ausgabe des zweiten Filters (220).

4. Vorrichtung nach einem der Ansprüche 2 bis 3, **dadurch gekennzeichnet, dass** die Menge von Maskierungsschaltungen eine Maske (231) umfasst, welche die Ausgaben des zweiten Filters empfängt, und dadurch, dass die Maske (231) zum Wechseln der Werte ihrer eigenen Wichtungsfaktoren unter der Steuerung eines Codegenerators (233) geeignet ist.

5. Vorrichtung nach einem der Ansprüche 2 bis 4, **dadurch gekennzeichnet, dass** die Menge von Maskierungsschaltungen eine erste Menge von Masken (311) umfasst, die einer jeweiligen Codemenge entsprechen, und die Menge von Maskierungsschaltungen ferner einen Block (317; 312; 313) zum Erlangen der Wörter umfasst, die den übrigen Synchronisationscodes entsprechen, die zu der durch das Verarbeitungsmodul (114) identifizierten Teilmenge gehören.

## Revendications

1. Dispositif pour obtenir, en fonction d'un signal reçu (r), une synchronisation de trame, et à identifier un groupe de codes dans un système de communication cellulaire qui utilise une pluralité de codes de synchronisation secondaires, dans lequel ledit signal reçu (r) est conforme à la norme 3GPP en mode de duplexage FDD ou TDD, ledit dispositif comprenant :
a) une première branche (411) pour obtenir, dans un premier intervalle de temps, une synchronisation de tranche sur un canal de synchronisation primaire, PSC, ladite première branche (411) comprenant au moins un corrélateur primaire (401 ; 210, 220), lequel reçoit ledit signal reçu (r), et une séquence de synchronisation primaire (SG), et un bloc subséquent (402) mettant en oeuvre un algorithme de synchronisation de tranche ;
b) une seconde branche (412) pour obtenir, dans un second intervalle de temps, une synchronisation de trame, sur un canal de synchronisation secondaire, ladite seconde branche (412) comprenant :
- au moins un corrélateur secondaire (404 ; 210, 220) pour corréler, dans ledit second intervalle de temps, ledit signal reçu (r) avec lesdits codes de synchronisation secondaires, en vue d'obtenir des valeurs d'énergie correspondantes ;
- une unité destinée à déterminer des valeurs d'énergie (16 ; 21 ; 114), conçue pour rechercher, parmi lesdites valeurs d'énergie, au moins une valeur maximale, et pour identifier, sur la base de ladite au moins une valeur maximale, un nombre donné desdits codes de synchronisation secondaires ; et
- un module de traitement (18 ; 22 ; 115) pour obtenir ladite synchronisation de trame et à identifier ledit groupe de codes sur la base dudit nombre donné desdits codes de synchronisation secondaires ;
c) un module de commande (403) configuré pour commander le fonctionnement de ladite première branche (411) et de ladite seconde branche (412), ledit module de commande recevant les résultats des opérations de traitement respectives, ledit au moins un corrélateur primaire (401) et ledit au moins un corrélateur secondaire (210, 220) étant constitués au moins en partie par un unique corrélateur, et ledit module de commande (403) étant configuré pour envoyer des signaux d'activation (EN, ENS), à des fins de commande, en commutant ledit au moins un corrélateur primaire (210, 220) afin d'opérer de manière sélective sur l'une parmi ladite séquence de synchronisation primaire (SG) et lesdites séquences de synchronisation secondaires ;
**caractérisé en ce que** ledit dispositif comprend, en tant que ledit corrélateur, un premier filtre adapté (210) suivi, en série, par un second filtre adapté (220), ledit premier filtre adapté comportant seize registres et un nombre correspondant de prises de sortie, ledit second filtre adapté (220) comportant deux cent quarante registres et seize sorties, ledit second filtre adapté (220) étant configuré pour être activé en partie uniquement, la sortie dudit premier filtre adapté (210) étant échantillonnée tous les seize chips depuis le début de l'exécution de la procédure de synchronisation de trame, et ledit dispositif étant configuré pour :
- organiser lesdites séquences de synchronisation dans une première partie de séquence secondaire (SG1) et dans une seconde partie de séquence secondaire (SG2) ;
- envoyer, audit premier filtre adapté (210) et audit second filtre adapté (220), ladite première partie (SG1) et ladite seconde partie (SG2) ;
- exécuter un changement de signe sur huit des pondérations du premier filtre adapté, afin de passer d'une première séquence, pour le canal de synchronisation primaire, à ladite première séquence, pour les codes de synchronisation secondaires ; et
- passer d'un code de synchronisation secondaire à l'autre en changeant les seize pondérations du second filtre adapté (220).

2. Dispositif selon la revendication 1, **caractérisé en ce que**, en aval dudit corrélateur (210, 220), est défini un ensemble de circuits de masquage (230 ; 231 ; 311, 312, 313).

3. Dispositif selon la revendication 2, **caractérisé en ce que** l'ensemble de circuits de masquage comprend une pluralité de masques définis en parallèle, à savoir un masque pour chaque sortie du second filtre (220).

4. Dispositif selon l'une quelconque des revendications 2 à 3, **caractérisé en ce que** l'ensemble de circuits de masquage comprend un masque (231) qui reçoit les sorties du second filtre, et **en ce que** ledit masque (231) est adapté pour changer les valeurs de ses propres pondérations sous la commande d'un générateur de codes (233).

5. Dispositif selon l'une quelconque des revendications 2 à 4, **caractérisé en ce que** l'ensemble de circuits de masquage comprend un premier ensemble de masques (311) correspondant à un ensemble de codes respectif, et **en ce que** ledit ensemble de circuits de masquage comprend en outre un bloc (317 ; 312 ; 313) pour obtenir les mots correspondant aux codes de synchronisation restants appartenant au sous-ensemble identifié par le module de traitement (114).
